(19) **Europäisches Patentamt**
**European Patent Office**
**Office européen des brevets**

(11) **EP 2 247 452 B1**

(12) **EUROPEAN PATENT SPECIFICATION**

(45) Date of publication and mention of the grant of the patent:
**29.06.2011 Bulletin 2011/26**

(21) Application number: **09715744.0**

(22) Date of filing: **13.02.2009**

(51) Int Cl.:
***B60C 1/00*** *(2006.01)*     ***C08G 18/32*** *(2006.01)*
***C08G 18/42*** *(2006.01)*     ***C08L 75/04*** *(2006.01)*
***C08L 75/06*** *(2006.01)*

(86) International application number:
**PCT/US2009/033983**

(87) International publication number:
**WO 2009/108510 (03.09.2009 Gazette 2009/36)**

(54) **POLYURETHANE ELASTOMER ARTICLES FROM LOW FREE DIPHENYLMETHANE DIISOCYANATE PREPOLYMERS**

POLYURETHAN-ELASTOMER-ARTIKEL AUS DIISOCYANAT-PRÄPOLYMEREN MIT GERINGEM ANTEIL VON FREIEM DIPHENYLMETHAN

ARTICLES À BASE D ÉLASTOMÈRES DE POLYURÉTHANE ÉLABORÉS À PARTIR DE PRÉPOLYMÈRES À FAIBLE TAUX EN DIPHÉNYLMÉTHANE DIISOCYANATE LIBRE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **25.02.2008 US 36939**
**08.09.2008 US 206534**

(43) Date of publication of application:
**10.11.2010 Bulletin 2010/45**

(73) Proprietor: **Chemtura Corporation**
**Middlebury, CT 06749 (US)**

(72) Inventors:
• **NYBAKKEN, George, H.**
**Middlebury**
**CT 06762 (US)**

• **PALINKAS, Richard, L.**
**Northfield**
**Connecticut 06778 (US)**
• **LASKOWITZ, Ian**
**Woodbury, CT 06798 (US)**
• **PETER, Thomas, H.**
**Southbury**
**Connecticut 06488 (US)**

(74) Representative: **Serravalle, Marco**
**Serravalle sas**
**Via G. Matteotti, 21/23**
**26854 Cornegliano Laudense (LO) (IT)**

(56) References cited:
**US-A- 4 086 214     US-A- 4 158 378**
**US-A- 4 921 029     US-A- 5 223 599**
**US-A- 5 654 390     US-A1- 2003 055 192**
**US-A1- 2003 225 240**

**Description**

FIELD OF THE INVENTION

The present invention relates to preparing polyurethane elastomer articles from a prepolymer mixture comprising the reaction product of polyol, such as a polyester, polyether or polycaprolactone (PCL), and diphenylmethane diisocyanate (MDI) and more specifically prepolymer mixtures containing from 2.0 wt% to 5,0 wt% of free MDI monomer.

BACKGROUND OF THE INVENTION

Industrial polyurethane elastomers are based on polyurethane prepolymers made by reacting polyols with excess molar amounts of diisocyanate monomers. Diisocyanate monomers include aromatic diisocyanates, such as diphenylmethane diisocyanate (MDI), toluene diisocyanate (TDI), naphthalene diisacyanate (NDI), 3,3'-bitoluene diisocyanate (TODI), and para-phenylene diisocyanate (PPDI), and aliphatic diisocyanates, such as 1,6-hexane diisocyartate (HDI), isophorone diisocyanate (IPDI), and methylene bis (p-cyclohexyl isocyanate) ($H_{12}$MDI).

Most commonly, aromatic diisocyanate monomers, such as MDI or TDI, are used in polyurethane prepolymers because aliphatic diisocyanates are generally accompanied by a decrease in mechanical properties. The presence of an aromatic isocyanate in the hard segment produces a stiffer polymer chain with a higher melting point. Also, Also, aliphatic diixocyanates, as well as TODI and PPDI, are more costly than TDI and MDI. However, the use of excess diisocyanate monome leaves ressidual unreacted monomer, resulting in potential industrial hygiene issues.

It is well known that both skin contact and inhalation of diisocyanate monomers must be carefully avoided. There are several known distillation methods to reduce the content of free diisocyanate monomers in polyurethane prepolymer mixtures to levels of less than 2 wt%. Distillation of common aliphatic diisocyanate monomers from prepolymer mixtures is much easter owing to their lower boiling points and much greater heat stabilitiy. Various methods are known to reduce the unreacted TDI levels in prepolymer mixtures to below 0.1 wt% residual monomer. There also are known methods of reducing the level of unreacted MDI in prepolymer mixtures.

Although it is know to reduce MDI and TDI levels to very low levels due to their associated toxicities, the effects of the presence of free MDI and free TDI during the curing process on the ultimately formed polyurethane elastomer article have hot been fully explored.

BRIEF SUMMARY Of THE INVENTION

In a first aspect of the present invention, there is provided a polyurethane elastomer article having the following properties: a Texus Flex value 30% of greater than 10,000 cycles, in accordance with ASTM procedure D-3629-99; and a minimum tan δ at 30-160°C of from 0.010 to 0.025. The polyurethane elastomer article also has the following additional properties: a tear strength property of from 26.3 to 78.8 N/mm (150 to 450 pli) in accordance with ASTM procedure D-1938, and a DIN abrasion of from 5 to 31 $mm^3$ in accordance with ASTM procedure D-5963.

In one embodiment, the polyurethane elastomer article is formed from a pre-elastomer mixture comprising a pre-polymer mixture, e.g., a polycaprolactone prepolymer, polyester prepolymer or polyether prepolymer, and a chain extender, e.g., a polyol or diamine. The pre-elastomer mixture also comprises from 2.0 wt% to 5.0 wt%, e.g., from 2.5 to 4.0 wt% or from 2.75 to 3.5 wt°, of free diphenylmethane diisocyanate.

The polyurethane elastomer articles according to the first aspect may have a three-axis thickness of from 10.2 cm to 493 cm, and may form an article weighting from 225 kg to 7,000 kg. In one embodiment, the articles is a non-pneumatic tire capable of supporting 9,000 kg two 91,000 kg and is suitable for off-the-road (OTR) vehicles.

In a second aspect of the present intention, there is provided a polyurethane elastomer article having the following properties: Texus Flex value at 30% of greater than 10,000 cycles in accordance with ASTM procedure D-3629-99, and a tear strength property of from 26.3 to 78.8 N/mm in accordance with ASTM procedure D-1938. Such articles may also have a DIN abrasion of from 5 to 31 $mm^3$ in accordance with ASTM procedure D-5963. These articles may also term non-pneumatic tires suitabte for OTR vehicles.

In a third aspect of the present invention, there is provided a polyurethane customer article comprising the reaction product of a prepolymer mixture comprising a polycaprolactone prepolymer and a diphenylmethane diisocyanate, wherein the prepolymer mixture comprises the diphenylmethane diisocyanate in an amount from 2.0 wt% to 5.0 wt%, and a chain extender, wherein the article has a three-axis thickness of from 10.2 cm to 493 m. Again, these articles may be tires suitably for OTR vehicles.

In a fourth aspect of the present invention, there is provided a process for making a polyurethane elastomer, comprising providing a prepolymer mixture comprising a polycaprolactone prepolymer and a diphenylmethane diisocyanate, wherein the prepolymer mixture comprises the diphenytmethane diisocyanate in an amount from 2.0 wt% to 5.0 wt%; mixing the prepolymer mixture with a chain extender to form a pre-elastomer mixture; and curing the pre-elastomer mixture to form the polyurethane elastomer. In one embodiment, a mixture of the prepolymer mixture and chain extender forms a pre-elastomer mixture having a pot life of from 1 to 35 days at 70°C.

In a firth aspect of the present invention, there is provided a process for making a polyurethane elastomer comprising mixing a first prepolymer mixture of mass. A and a second prepolymer mixture of mass *B*, said first prepolymer mixture comprising a first polycaprolactone and X wt% free diphenylmethane diisocyanate, and said second prepolymer mixture comprising a second polycaprolactone and Y wt% free diphenylmethane diisocyanate, and wherein *A, B, X* and Y are selected such that *(AX+BY)/(A+B)* is from 2.0 to 5.0, and curing the mixed first and second prepolymer mixtures with chain extender to form said polyurethane elastomer.

## BRIEF DESCRIPTION OF THE DRAWINGS

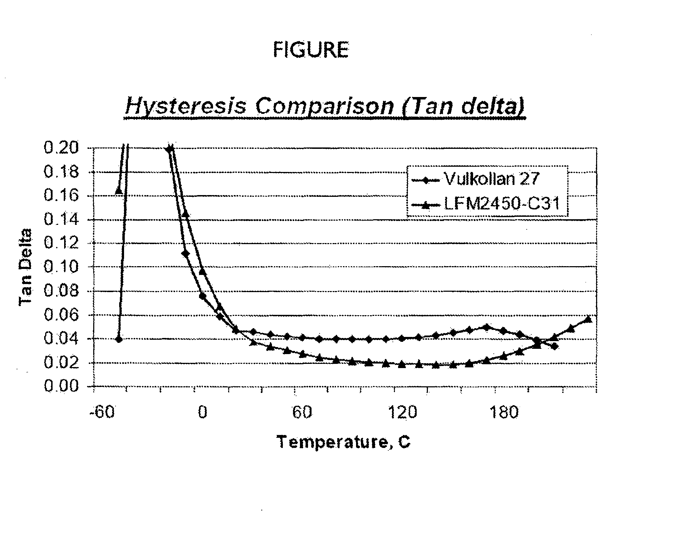

The foregoing and other objects and advantages of our invention will appeal more fully from the following description, made in connection with the accompanying drawing of nonlimiting preferred embodiment of the inventions, wherein like characters refer to the same or similar parts throughout the views, and in which:

the Figure is a graph of the tan δ of a polyurethane elastomer article in accordance with an embodiment of the present invention.

## DETAILED DESCRIPTION OF THE INVENTION

In one embodiment, the present invention is directed to a polyurethane elastomer article made from (i) a polyurethane prepolymer mixture and (ii) a chain extender. The polyurethane prepolymer mixture comprises the reaction product of a polyol, e.g., a polyester, a polyether, or a polycaprolactone (PCL), and diphenylmethane diisocyanate (MDI). According to a preferred embodiment the prepolymer mixture has a free MDI content of from 2.0 to 5.0 wt%, e.g., from 2.5 to 4.0 wt% or from 2.75 to 3.5 wt%, based on the total mass of the prepolymer mixture. The chain extender, for example, may be a polyol or a diamine.

It has surprisingly and unexpectedly been discovered that polyurethane elastomers formed from prepolymer mixtures comprising a PCL polyol having these free MDI levels possess excellent tear strength and fatigue life properties and may be well-suited for applications such as, for example, the formation of non-pneumatic tires, and, in particular, off-the-road (OTR) non-pneumatic tires. Further, it has unexpectedly been discovered that a PCL polyol and MDI prepolymer mixed with a curative comprising a blocked methylenedianiline (MDA), such as a MDA-salt complex, can produce polyurethane pre-elastomer mixtures having long stable shelf lives that are suitable for making large elastomer articles having thick sections once cured. Further, it has surprisingly and unexpectedly been discovered that Polyurethane elastomers formed from prepolymer mixtures comprising a polyester or polyether polyol having these free MDI levels possess excellent tear strength and fatigue life properties, which preferably are ideally suited for non-pneumatic tire applications, such as OTR non-pneumatic tire applications. In addition, it has unexpectedly been discovered, that combining prepolymer mixtures with a curative comprising an MDA-salt complex can produce polyurethane pre-elastomer mixtures having long stable shelf lives that are suitable for making large elastomer articles having thick sections once cured.

As employed herein, the term "polyurethane prepolymer mixture" or "prepolymer mixture" means the redaction product of at least one polyol with a diisocyanate monomer, i.e, a polyurethane prepolymer. The polyurethane prepolymer mixture preferably comprises a polyurethane prepolymer, an amount of free MDI, and optionally one or more solvents or plasticizers. As employed herein, the term "free MDI" prefers to unreacted or residual MDI monomer that is in the prepolymer mixture after formation of the polyurethane prepolymer (an isocyanate-terminated oligomer formed from the reaction of the MDI monomer and the polyol) as well as MDI that may be added, e.g., "back added," to the prepolymer mixture after the step of forming the polyurethane prepolymer. In another aspect, the prepolymer mixture and the chain extender are mixed with one another, and free MDI is added thereafter to the resulting reaction mixture, but prior to formation of the cured polyurethane customer.

As employed herein, the term "polyurethane pre-elastomer mixture" or "pre-elastomer mixture" means the mixture of at least a polyurethane prepolymer mixture and a chain extender. In such a mixture, the chain extender preferably does not immediately cure the polyurethane prepolymer in the prepolymer mixture and, as a result, the mixture remains substantially stable, Once the mixture is heated to a de-blocking temperature, the chain extender cures the polyurethane prepolymer in the prepolymer mixture to form a polyurethane elastomer article.

Prepolymer Mixtures

Polyurethane prepolymer mixtures may be obtained by reacting one or more polyols with the diisocyanate monomer, e.g., MDI, by procedures known in the art. In one embodiment, the prepolymer is made by reacting the polyol with a large excess of diisocyanate monomer, e.g., MDI, such as at an initial MDI: polyol molar ratio greater than 2:1, e.g., greater than 4:1 or greater than 7:1.

As used herein, "MDI" means any stereoisomer of MDI or a mixture of MDI stereoisomers. MDI may, include, for example, methylene bis(4-phenylisocyanate). MDI is commercially available as the pure 4,4'-diphenylmethane diisocyanate isomer (e.g., Mondur MP, Bayer) and as a mixture of isomers (e.g., Mondur ML, Bayer and Lupranate MI, BASF). The most preferred form is the pure 4,4'-isomer.

Generally, polyurethane prepolymer mixtures may be formed from polycaprolactone-based polyols, polyether-based polyols, or polyester-based polyols. In various embodiments, the potyol may comprise one or more of a polyether, a polyester, or a polycaprolactone, preferably having a molecular weight (MW) ranging from 200 to 6000, e.g., from 400 to 3000 or from 1000 to 2500. In this context, molecular weight refers to the number average molecular weight in Daltons. Such polyols may include, for example, polyester of adipic acid, polyether of ethylene oxide, polyether of propylene oxide, polyether of tetrahydrofuran, polycaprolactone (PCL), polycarbonate, and mixtures thereof. In various optional embodiments, the polyol comprises glycols or triols having molecular weights ranging, for example, from about 60 to about 400. e.g., from about 80 to about 300 or from about 100 to about 200. Such glycols or triols may include, for example, ethylene glycol, isomers of propylene glycol, isomers of butane diol, hexanediol, trimethylolpropane, pentaerythritol, poly(tetramethylene ether) glycol, diethylene glycol, triethylene glycol, dipropylene glycol, tripropylene glycol, and mixtures thereof.

Representative polyols include polypropylene glycol (PPG) such as Acclaim 4220 (mw=4037, Bayer MaterialScience), PPG diol polymer from propylene oxide (PPG 4000), Acclaim 3201 (mw=3074, Bayer MaterialScience), PPG-EO diol (copolymer from propylene oxide and ethylene oxide) (PPG-EO 3000), Arcol R-2744 (mw=2240, Bayer MaterialScience). PPG diol (PPG 2000), poly(ethylene adipate) glycol (PEAG) such as PEAG 1000 (mw=980, Chemtura Corporation), PEAG 2000 (mw=1990, Chemtura Corporation), and PEAG 2500 (mw=2592, Bayer MaterialScience), poly(trimethylolpropane ethylene adipate) glycol (PTEAG), poly(tetramethylene ether) glycol (PTMEG ot PTMG), such as Terathane™ 1000 (mw=994, Invista), Terathane™ 2000 (mw=2040, Invista), tripropylene glycol (mw=192, Aldrich Chemical Company, Inc.), and diethylene glycol (mw= 106, Aldrich Chemical).

In a preferred embodiment, the prepolymer is a PCL prepolymer. For example, in various embodiments, the PCL that is reacted with diisocyanate, e.g., MDI, to form the PCL prepolymer has a molecular weight ranging from 200 to 6000, e.g., from 400 to 3000 or from 1000 to 2500. Representative PCLs include those having an average molecular weight of from 400 to 3000, such as Dow TONE 0240, 1241, or 2241; Perstorp CAPA 2043, 2125, 2205, 2201, 2.101A, 2201A, 2304, 3031, or 7201A; or Daicel Placel 220 CP. The PCL is typically formed from an initiator diol such as diethylene glycol, 1,4-butanediol, neopentyl glycol, 1,6-hexanediol, or PTMEG. Triols such as trimethylolpropane may also be employed as the initiator. More specifically, the PCL may be dimethylol propionic acid (DMPA) initiated Capa™ products from Perstorp, UK Ltd.

Representative prepolymer mixtures comprising PCL prepolymer and free MDI include, for example, Vibrathane 8030, Vibrathane 8045, Adiprene LFM2400 and Adiprene LFM2450, which are available from Chemtura Corporation. In some embodiments, the prepolymer mixture may comprise two or more of the these materials.

Adiprene™ LFM 2400 is an MDI terminated PCL prepolymer mixture having a very low free MDI content (typically <0.5%) due to a monomer removal step during manufacture. Adiprene™ LFM 2400 may be cured with Caytur™ curatives to yield a high performance articles, preferably having a Shore Hardness of about 92A. The NCO content of the prepolymer is about 3.92% and the equivalent weight is about 1072.

Adiprene™ LFM 2450 is an MDI terminated PCL prepolymer mixture having low free MDI content (typically about 3.0% to 4.0%) due to a monomer removal step during manufacture. The NCO content of the prepolymer is from 4.35% to 4.55% and the equivalent weight is from 923 to 966. Adiprene™ LFM 2450 is particularly suited for forming high performance articles such as industrial non-pneumatic tires, e.g., OTR non-pneumatic tires, and wheels.

Vibrathane™ 8030 is an MDI terminated PCL prepolymer mixture that, for example, may be cured to form articles having a Shore Hardness of 80A using 1,4-butanediol or cured to form articles having a Shore Hardness of 92A using methylenedianiline (MDA). The NCO content of the prepolymer is from 5.8% to 6.2% and the amine equivalent weight is from 678 to 725. No monomer removal step is used in the preparation of this prepolymer. As a result, free MDI content of this prepolymer is from 10.0% to 15.0% by weight.

In one embodiment of the present invention, two or more polyurethane prepolymer mixtures may be combined and cured to form a polyurethane elastomer. In this aspect, two or more of the polyurethane prepolymer mixtures may comprise polyurethane prepolymers formed from a polyol, e.g., PCL, having different molecular weights or different levels of free MDI from one another. In another aspect, two or more prepolymer mixtures that are formed from different polyols, e.g., such as a PCL and a PTMEG, are combined with one another. In one such embodiment, for example, the prepolymer mixture comprises a first prepolymer formed from a first PCL having a molecular weight of about 1000 to 1500 and a second prepolymer formed from a second PCL having a molecular weight of about 2000 or higher. In another such embodiment, the combined prepolymer mixture comprises a first prepolymer formed from PCL having a molecular weight of about 1250, a second prepolymer formed from another PCL having a molecular weight of about 2000 or higher, and a third prepolymer formed from yet another PCL having a molecular weight of less than 1250. It should be understood that various other combinations of prepolymers may be used with other embodiments of the present invention.

As indicated above, in one embodiment the prepolymer mixture preferably is the reaction product between a PCL and MDI, wherein the MDI is present in excess. In some embodiments, for example, the molar ratio of MDI to PCL that is used to form the PCL prepolymer is greater than 2:1, e.g., greater than 4:1 or greater than 7:1. In terms of ranges, the molar ratio of MDI to PCL, for example, may be from 2:1 to 20:1, e.g., from 3:1 to 15:1 or from 5:1 to 10:1. The MDI and PCL preferably are reacted at a maximum temperature ranging from 30°C to 120°C, e.g., from 50°C to 110°C. In one embodiment, the reaction is carried out at a maximum temperature ranging from 50°C to 110°C with agitation.

The polyurethane prepolymer mixture may comprise adducts having a "MDI-polyol-MDI" structure (here termed "ABA" structure, where A denotes MDI and B denotes the polyol), or higher molecular weight adducts that contain two or more polyol moieties (here termed "oligomers" of structure "ABABA," "ABABABA," etc.). In one embodiment, when excess starting amounts of A are used, the formation of ABA structure may be favored over oligomers of structure ABABA or ABABABA. In general, the formation of oligomers of structure ABABA or ABABABA are less favored.

Each ABA and ABABA adduct has two unreacted NCO groups, one on each of the terminal A moieties. The internal A moiety in the ABABA adduct has no remaining unreacted NCO group. Therefore, the ABABA adduct has a lower weight percentage NCO content than does the ABA adduct. Certain larger amounts of unreacted A, free MDI, may be undesirable because the free MDI creates toxic atmospheric fumes in handling. Thus, in a polyurethane prepolymer mixture with a low content of unreacted A, the relative content of ABA to higher molecular weight adducts can be determined by the percent NCO content of the mixture. A large molar excess of MDI over the polyol minimizes oligomer formation. A MDI:PCL molar ratio of at least about 5:1 or greater favors formation of a final polyol prepolymer mixture (after removal of any solvent and free MDI monomer) having an NCO content that is at least about 80% of the theoretical NCO content for a pure ABA structure.

As an illustration, consider a PCL polyol of number average molecular weight (mw) 1000. MDI has mw 250. Thus, the ABA adduct would have an mw of 250+1000+250, or 1500. The ABA adduct would also have two NCO end groups, of 42 daltons each. Thus, tie theoretical NCO content would be 2(42)/1500=5.6% by weight for the ABA structure. By a similar calculation, it is seen that the ABABA structure would have a theoretical NCO content of 2(42)/2750=3.05% by weight. Pure MDI monomer itself has about 33.6% NCO content.

Chain Extenders

Generally, the prepolymer mixtures employed may have low viscosities, low monomeric MDI levels, and high NCO contents, e.g., at least 80%, e.g., at least 90% or at least 94%, of the theoretical NCO content for the ABA structure and free MDI content of from 2.0 to 5.0 wt%, e.g., from 2.5 to 4.0 wt% or from 2.75 to 3.5 wt%, based on the total mass of the prepolymer mixture. The prepolymer mixtures may be easily chain-extended by various chain extenders, also referred to as curatives, at moderate processing temperatures, even with neat diamines that are not practical for hot-casting of conventional MDI-based prepolymers. The molar ratio of prepolymers to curatives, for example, may be in the range of from 1:2 to 3:1, e.g., from 0.7:1 to 1.2:1 or from 1.1:1 to 0.9:1. The amount of curative may also be calculated by the following formula:

$$C_{100p} = \frac{(NCO\%)(C_{ew})(\%Theory)}{4202}$$

where $C_{100p}$ is the parts curative per 100 parts prepolymer, NCO % is percent of NCO content of the prepolymer, $C_{ew}$ is the equivalent weight of the curative, and % Theory is the stoichiometry for the curative. Thus, for example, the calculated amount of a curative with an equivalent weight of 133.5 and 95% stoichiometry cured with a prepolymer having 4.1 NCO)% would be 12.4 parts of curative per 100 parts prepolymer on a mass basis.

In one embodiment, the stoichiometry relationship between the pre-polymer mixture and curative may have wide processing window and still produces articles haying substantially similar properties. The stoichiometry range is from 90% to 105%, with reduced properties at 110% and significant degradation at 120%. The stoichiometry may be adjusted to finely adjust the properties of the elastomer article. For example, an elastomer article may have improved dynamics at 90-95% stoichiometry, while flex fatigue may be better at 100%.

The chain extenders may be selected, for example, from one or more of water, aliphatic diols, aromatic diamines, or mixtures thereof. Representative polyol chain extenders include aliphatic diols, such as 1,4-butanediol (BDO), resorcinol di(beta-hydroxyethyl) ether (HER), resorcinol di(beta-hydroxypropyl) ether (HPR), hydroquinone-bis-hydroxyethyl ether (HQEE), 1,3-propanediol, ethylene glycol, 1,6-hexanediol, and 1,4-cyclclohexane dimethanol (CHDM); aliphatic triols and tetrols, such as trimethylol propane; and adducts of propylene oxide and/or ethylene oxide having molecular weights in the range of from 190 to 500, such as various grades of Voranol™ (Dow Chemical), Pluracol™ (BASF Corp.) and Quadrol™ (BASF Corp.).

Representative diamine chain extenders include 4,4'-methylene-bis(2-chloroaniline) (MBCA); 4,4'-methylene-bis(3-chloro-2,6-diethylaniline (MCDEA); diethyl toluene diamine (DETDA; Ethacure™ 100 from Albemarle Corporation); tertiary butyl toluene diamine (TBTDA); dimethylthio-toluene diamine (Ethacure™ 300 from Albemarle Corporation); trimethylene glycol di-p-amino-benzoate (Vibracure™ A157 from Chemtura Corporation or Versalink™ 740M from Air Products and Chemicals); methylene bis orthochloroaniline (MOCA), methylene bis diethylaniline (MDEA); methylenedianiline (MDA); and MDA-salt complexes (Caytur™ 21, 21-DA, 31, and 31-DA from Chemtura Corp.).

Caytur™ 21 and Caytur™ 21-DA are blocked delayed action amine curatives for use with isocyanate terminated urethane prepolymers. Such curatives comprise a complex of MDA and sodium chloride dispersed in a plasticizer (dioctyl phthalate in case of Caytur 21 and dioctyl adipate in case of Caytur 21-DA) and optionally a pigment. Caytur 21 has 50% active solids dispersed in DOP. Caytur 21-DA has 60% active solids dispersed in DOA. Caytur 31 has a low free MDA content (typically <2.00%). Amine group concentration is 6.45% in Caytur 21 and 7.72% in Caytur 21-DA. Hence the equivalent weight is 219 for Caytur 21 and 183 for Caytur 21-DA.

At room temperature each curative reacts very slowly with terminal isocyanate groups: However at 100°C-150°C, the MDA-salt complex unblocks and the freed MDA reacts rapidly with the prepolymer to form the elastomer. A variety of salts may be used to form such complexes with MDA, including sodium chloride, sodium bromide, potassium chloride, and lithium chloride. Sodium chloride is preferred. Such curatives yield urethanes with similar or superior properties to urethanes cured with MBCA. Suitable grades of prepolymers are available to provide a full range of hardnesses from 79A to 62D using such Caytur curatives. Caytur 21 when used with a lighter tint or pastel pigment may exhibit properties similar to MBCA as compared to a Catyur curative with a brighter pigment shade.

Caytur 31™ and Caytur™ 31-DA are blocked delayed action amine curatives for use primarily with isocyanate terminated urethane prepolymers. Such curatives comprise a complex of MDA and sodium chloride dispersed in a plasticizer (dioctyl phthalate in case of Caytur 31 and dioctyl adipate in case of Caytur 31-DA) and optionally a pigment. Caytur 31 has a very low free MDA content (typically <0.5%). At room temperature, such curatives are virtually nonreactive. However at 115°C-60)C, the salt unblocks and the freed MDA reacts rapidly with the prepolymer to term a tough elastomer. Amine group concentration is 5.78% in Caytur 31 and Caytur 31-DA. Hence the equivalent weight is about 244 to about 250 for Caytur 31 and Caytur 31-DA. These groups are blocked by sodium chloride.

Preferred chain extenders include BDO, HQEE, MBCA, Vibracure™ A, MCDEA, Ethacure™ 300, DETDA, and Caytur™ 21 and 31. Such cured pre-elastomer mixtures have surprisingly been shown to form polyurethane elastomer articles having highly desirable physical properties for various applications, and, in particular, for forming durable articles such as non-pneumatic tires, more preferably OTR non-pneumatic tires.

Level of Free MDI

It has now been discovered that curing a prepolymer mixture, e.g., PCL prepolymer mixture, having a free MDI concentration between 2.0 wt% to 5.0 wt%, e.g., from 2.5 to 4.0 wt% or from 2.75 to 3.5 wt%, based on the total mass of the prepolymer mixture, surprisingly and unexpectedly yields polyurethane elastomers having a highly desirable combination of physical properties such as, for example, wear resistance, tear strength and fatigue life.

Due to the excess of MDI employed during the formation of the prepolymer, e.g., PCL prepolymer, the initial prepolymer mixture typically contains more than 10 wt% free MDI, typically more than 25 wt% free MDI, based on the total mass of the initial prepolymer mixture. Thus, in accordance with the embodied processes of the invention, the free MDI content should be reduced. In one embodiment the amount of free MDI content is reduced to a range from 2.0 wt% to 5.0 wt%, e.g., from 2.5 to 4.0 wt% or from 2.75 to 3.5 wt%, based on the total mass of the prepolymer mixture, In another embodiment the free MDI content is reduced to less than 3.0 wt%, e.g., less than 2.0 wt%, less than 1.0 wt% or less than 0.7 wt%, and MDI monomers are added to the resulting prepolymer mixture in order to arrive at the desired free MDI level of from 2.0 wt% to 5.0 wt%, e.g. 2.5 to 4.0 wt% and 2.75 to 3.5 wt%.

Thus, in one embodiment, the reaction mixture (i.e., pre-elastomer mixture) comprises a polyurethane prepolymer mixture, e.g., PCL prepolymer mixture, in combination with curative. As indicated above, the prepolymer mixture preferably comprises a PCL prepolymer and has a free MDI content of from 2.0 wt% to 50 wt%, e.g., from 2.5 to 4.0 wt%, from 2.75 to 3.5 wt%, or 3 wt%, based on the total mass of the prepolymer mixture. In a first aspect, the content of free MDI is reduced, e.g., through distillation, to a level of from 2.0 to 5.0 wt%, e.g., from 2.5 to 4.0 wt% or from 2.75 to 3.5 wt%, based on the total mass of the polyurethane prepolymer mixture, after formation of the polyurethane prepolymer but before mixing of the polyurethane prepolymer mixture and the chain extender.

In a a second aspect, the content of free MDI is reduced, e.g., through distillation, to a low level, e.g., to a level less than 2.0 wt%, such as less than 1.0wt% or less than 0.7 wt%, based on the total mass of the polyurethane prepolymer mixture, e.g., PCL prepolymer mixture, after formation of the polyurethane prepolymer. MDI monomer (free MDI) may then be added to the prepolymer mixture such that the total free MDI in the resulting prepolymer mixture is from 2.0 to 5.0 wt%, e.g., from 2.5 to 4.0 wt% or from 2.75 to 3.5 wt%, based on the weight of the prepolymer mixture, e.g., PCL prepolymer mixture.

However it is formed, the resulting prepolymer mixture, e.g., PCL prepolymer mixture, is ultimately mixed with the chain extender and preferably heated to from the final polyurethane elastomer. The curative as described above, preferably comprises a methylmedianiline-sodium chloride complex (preferably Caytur™ 31-DA).

In a third aspect, the content of free MDI in the prepolymer mixture, e.g., PCL prepolymer mixture, is reduced, preferably through distillation, to a low level, e.g., to a level less than 2.0 wt%, such as less than 1.0 wt% or less than 0.7 wt%, after formation of the polyurethane prepolymer but before mixing of the polyurethane prepolymer mixture. The resulting prepolymer mixture is then mixed with the chain extender to form a reaction mixture. Prior to curing, MDI monomer (free MDI) is then added to the reaction mixture such that the total free MDI in the resulting reaction mixture is from 2.0 to 5.0 wt%, e.g., from 2.5 to 4.0 wt% or from 2.75 to 3.5 wt%, based on the total mass of the prepolymer mixture plus back-added free MDI that is present in the reaction mixture. The resulting reaction mixture with back-added free MDI is then preferably heated to form the final polyurethane elastomer. Of course, in other embodiments, various combinations of the aforementioned three aspects could be employed.

As indicated above, once formed, the prepolymer mixture, e.g., PCL prepolymer mixture, preferably is processed, e.g., through distillation, optionally vacuum distillation, to reduce its free MDI level to a level of from 2.0 wt% to 5.0 wt%, e.g. 2.5 to 4.0 wit% and 2.75 to 3.5% (or to a lower level if it is desired to back add additional free MDI). Processes for reducing MDI levels are known and are described, for example, in U.S. Publication No. 2003/0065124, filed August 2,2001, the entirety of which is incorporated herein by reference. In one aspect, the prepolymer mixture is distilled in the presence of at least one inert solvent having a boiling point that is slightly below that of the MDI.

Another process, disclosed in U.S. Patent No. 5,703,193, the entirety of which is incorporated herein by reference, removes free MDI content without the use of solvents at high temperatures and in a vacuum. Under these conditions, the free MDI content is reduced from an estimated starting level of 57 wt% to 0.7 wt% through a series of passes. Another process uses a combination of high and low boiling point solvents to remove free MDI content as disclosed in U.S. Patent No. 5,703,193, previously incorporated herein. Another process uses a low boiling point solvent to remove free MDI content to below 2.0 wt% as disclosed in U.S. Publication No. 2003/0065124, previously incorporated herein. It should be understood to those of ordinary skill in the art that any such recess to reduce free MDI content may be used with embodiments of the invention so long as the final free MDI level is within the ranges specified herein.

U.S. Publication No. 2003/0065124 is directed to the removal of monomeric diisocyanates, especially MDI, from prepolymer mixtures. An inert solvent is used to facilitate removal of the monomeric diisocyanates from the prepolymer mixtures. The inert solvent should have boiling point slightly lower than that of the diisocyanate monomers under vacuum conditions. The inert solvent should have a boiling point (bp) from 1°C to 100°C below that of the diisocyanate at a vacuum of 10 torr. For MDI (bp 215°C), examples of suitable inert solvents include dimethyl phthalate (DMP) (bp 147°C), diethyl phthalate (bp 158°C), diisobutyl adipate (bp 168°C), and dibutyl phthalate (DBP) (bp 192°C). Such inert solvent are those that do not react with the prepolymers, do not decompose, and have good miscibility with the diisocyanates and prepolymers. According to the process, the MDI is dissolved in the inert solvent, such as DMP or DBP, at a temperature of about 50°C before charging the polyol. Also, the inert solvent could be blended in after the prepolymer mixture is formed, according to techniques well known in the art for the preparation of urethanes.

The weight ratio of MDI to solvent may range, for example, from 10:90 to 90:10, e.g., from 20:80 to 80:20, or from 25:75 to 65:35. At higher ratios, the MDI may form crystals and precipitate at room temperature, while at significantly lower ratios, it may be impractical and difficult to remove the solvent during distillation.

As indicated above, the crude prepolymer reaction product, e.g., PCL prepolymer mixture, typically contains a large amount of unreacted MDI and solvent, which are removed by distillation. Any distillation equipment that efficiently operates at deep vacuum, moderate temperature, and short residence time may be used in this step. Exemplary equipment incudes an agitated film distillation system commercialized by Pope Scientific, Inc.; Artisan Industries, Inc.; GEA Canzler GmbH & Co.; Pfaudler-U.S., inc.; InCon Technologies, L.L.C.; Luwa Corp.; UIC Inc.; or Buss-SMS GmbH for this purpose, Continuous units with internal condensers are preferred due to the lower operating vacuums of from 0.001 to 1 torr.

Excess MDI and solvent may be stripped at a pressure of 0.04 torr and at a temperature between 120°C and 175°C, although stripping at 0.02 torr or below and 140°C or below may generate the best results. The importance of minimizing high temperature degradation of the prepolymers from aromatic diisocyanate monomers is described in U.K. Patent No. 1,101,410, the entirety of which is incorporated herein by reference, which recommends that distillation be conducted under vacuum with an evaporative temperature preferably under 175 °C. U.S. Patent No. 4,182,825 describes the use of evaporative jacket temperatures of 150- 160°C for TDI prepolymers. U.S. Patent No. 5,703,193 describes the use of a jacket temperature of 120°C.

In the operation of agitated film distillation equipment, the condenser temperature for the distillate may be at least 100°C below the evaporative temperature. This provides a driving force for the rapid and efficient evaporation, then condensation, of the distillate. Thus, to distill off MDI monomer at an evaporator temperature of 140°C or lower (to avoid thermal decomposition of the prepolymer), a condenser temperature of 40°C or below may be desirable. Since neat MDI has a melting point of 40°C, a higher condenser temperature may be required to prevent solidification of the MDI in the condenser. The use of a solvent permits condensation at lower temperatures, e.g., 30°C or lower. Thus, the use of a solvent makes possible the use of lower evaporator temperatures, thereby avoiding thermal decomposition of the prepolymer.

When the recommended stripping conditions are observed, U.S. Publication No. 2003/0065124 discloses that the prepolymer mixture may contain less than 0.1 wt% solvent and 0.1 to 0.3 wt% MDI after one pass, and the distillate can come out clean and remain transparent at room temperature. The distillate can then be reused to produce more prepolymer. Monomeric MDI levels can drop down to less than 0.1 wt% after two or three passes.

In another embodiment, as indicated above, two or more polyurethane prepolymer mixtures, e.g., PCL prepolymer mixtures, are blended together to form a resulting prepolymer mixture having the desired free MDI level of from 2.0 to 5.0, e.g., from 2.5 to 4.0 or from 2.75 to 3.5. In one aspect, two prepolymer mixtures are blended together according to the following equation:

$$(AX + BY)/(A + B) = Z$$

wherein
$A$ is the mass of the first prepolymer mixture
$B$ is the mass of the second prepolymer mixture
X is the free MDI concentration in the first prepolymer mixture,
Y is the free MDI concentration in the second prepolymer mixture,
Z is the resulting free MDI concentration, which, according to the invention, is from 2.0 to 5.0 wl%, e.g., 2.5 to 4.0 wt% or 2.75 to 3.5 wt%, based on the weight of the prepolymer mixture, e.g., PCL prepolymer mixture.

When additional prepolymers are used, such as C for a third prepolymer mixture or D for a fourth prepolymer mixture, etc., the above equation may expand accordingly. For example, when three prepolymer mixtures are used the equation is

$$(AX + BY + CW)/(A + B + C) = Z$$

wherein C is the mass of the third prepolymer and W is the free MDI concentration in the third prepolymer mixture. When four prepolymer mixtures are used the equation is

$$(AX + BY + CW + DV)/(A + B + C + D) = Z$$

wherein D is the mass of the fourth prepolymer and V is the free MDI concentration in the fourth prepolymer mixture. Additionally prepolymer mixtures will expand the equation in a similar manner.

For example, one prepolymer mixture, e.g., PCL prepolymer mixture, may have a free MDI content that is greater than 2.0 wt% and the other prepolymer mixture may have a free MDI content of less than 5.0 wt%. The resulting blend of prepolymer mixtures will have a free MDI content of from 2.0 wt% to 5.0 wt%. As another example, if a first prepolymer mixture having a free MDI content of 6.0 wt% is blended in a 1:1 mass ratio with a second prepolymer mixture having a free MDI content of 0.2 wt%, the resulting blend will have a free MDI content of about 3.1 wt%. Additional prepolymer mixtures (e.g., 3, 4 or more prepolymer mixtures) may be blended with the first and second mixtures and the resulting free MDI level may be similarly determined.

In embodiments in which the free MDI content is reduced to less than 2.0 wt%, e.g. less than 1.0 wt% and less than 0.7 wt%, MDI monomers may be back-added to the polyurethane prepolymer mixture, e.g., PCL prepolymer mixture, as described above. In such processes, the free MDI content is preferably increased to a range of from 2.0 to 5.0 wt%, e.g., from 2.5 to 4.0 wt% or from 2.75 to 3.5 wt%, based on the weight of the prepolymer mixture, e.g., PCL prepolymer mixture Using a process disclosed in U.S. Publication No. 2003/0065124, which reduces free MDI content to 0.1 wt%, a sufficient amount of MDI monomers may be black-added.

In one embodiment, the reaction mixture comprises a polyurethane prepolymer mixture having a polyester or polyether polyol that may have a free MDI content of from 0.01 to 10 wt%, e.g. 0.5 to 7 wt% or 2 to 5 wt%. Free MDI content for polyester or polyether polyol prepolymer mixtures may be backed-added as described above for PCL prepolymer mixtures.

Pre-Elastomer Mixture

Once formed and preferably processed to reduce its free MDI concentration, the prepolymer mixture, e.g., PCL prepolymer mixture, is mixed with a chain extender, e.g., diol or amine chain extender, to form a pre-elastomer mixture. The pre-elastomer mixture may be heated under conditions effective to form the polyurethane elastomer. In one embodiment, the molar ratio of polyurethane prepolymer mixture, e.g., PCL prepolymer mixture, to chain extender in the reaction mixture is in the range of from 0.5:1 to 1.5:1, e.g., from 0.7:1 to 1.2:1 or from 1.1:1 to 0.95:1. Polyurethane elastomers can be made by extending the chains of the prepolymer with the chain extenders by methods known in the art. The temperature employed for curing the reaction mixture may vary, but will typically be greater than 40°C, e.g., greater than 70°C or greater than 90°C. In terms of ranges, the curing temperature optionally is from 20°C to 160°C, e.g., from 90°C to 150°C. Reactivity and cure temperature can be adjusted with catalyst depending on the chain extender employed.

One advantage of using MDA blocked with a salt as a curative, is that once de-blocked, the salt does not need to be separated from the cured polyurethane elastomer. In other words, properties of the elastomer are generally unaffected by the presence of the salt in the elastomer.

In one embodiment of the invention, the process of curing the pre-elastomer mixture may be done using cool technique. A cool technique involves pouring the pre-elastomer mixture, which is at a temperature of about 50°C or less, into a mold that is at a temperature of about 50°C or less, e.g., less than 40°C or less than 30°C. Once the mold is filled, the oven temperature is increased, for example to a temperature of about 120°C, in order to de-block the chain extender and initiate the cure. The rate at which the temperature of the mold should increase may vary. Preferably, the prepolymer mixture comprises free MDI in an amount ranging from 2.0 to 5.0 wt%, e.g., from 2.3 to 4.0 wt% or from 2.75 to 3.5 wt%, based on the weight of the prepolymer mixture, e.g., PCL prepolymer mixture.

Deblocking an MDA-salt complex, such as Caytur, is a sensitive process and, without being bound by theory, higher levels of free MDI are believed to inhibit de-blocking. Thus, pre-polymer mixtures having a free MDI level greater than 5 wt% may be suitable for hot techniques, i.e., a hot mold, hot pre-elastomer mixture, and/or hot inserts, but generally do form durable high performance articles using the cool technique. Once the de-blocking temperature is reached and the MDA-salt complex is inhibited from de-blocking, then the MDA-salt complex will not de-block to produce an elastomer with suitable physical properties regardless of the time or temperature of cure. It should be noted, however, that such inhibited de-blocking may cure to form a polymer with less desirable physical properties. Generally, the MDA-salt complex has one opportunity to de-block and, if missed, the resulting product will unsuitable physical properties for high performance applications.

Large Elastomer Articles

As indicated above, for TDI- and MDI-prepolymers the free diisocyanate has a deactivating effect on the unblocking of the MDA. Prepolymer mixtures having a high free diisocyanate monomer content and having a high NCO content, such as from 6% to 20%, cure more slowly than polymers of lower diisocyanate monomer content and NCO content, such as from 0.5% to 6%. Thin sections of elastomer articles, e.g., of up to 0.125 inches (0.32cm), generally cure without difficulty using prepolymer mixtures having a high NCO content. Sections having a three-axis thickness of from 2 to 4 inches (5.1 to 10.2 cm), however, often develop cracks or voids during curing because the center of the elastomer article does not warm up to the unlocking temperature as quickly as the outer section using prepolymer mixtures having a high NCO content. By three-axis thickness, it is meant a legion or section having the recited thickness in each of the x, y and z directions. Larger articles similarly exhibit cracking and incomplete curing when formed from high NCO content prepolymer mixtures.

One way to partially overcome the deactivating effect of free isocyanate is to increase cure temperature. In sections having a three-axis thickness of from 2 to 4 inches (5.1 to 10.2 cm) this approach merely aggravates the temperature and cure rate differential between the outer edges and the center of the article. Another way to partially overcome the deactivating effect is to use a catalyst, such as glycerols, ureas, or other poplar compounds, to reduce the unblocking temperature of a blocked curative, such as Caytur™. The concentration of catalyst may range, for example, from 0.01 to 5.0 wt%, e.g., from 0.25. to 0.75 wt% or from 0.45 to 0.55 wt%, based on the total mass of the resin.

For prepolymer mixtures of the invention, for example, PCL prepolymer mixtures, it has unexpectedly been discoverer that a large elastomer article having a three-axis thickness greater than 4 inches (10.2 cm), e.g., greater than 15 inches (38.1 cm), greater than 25 inches (63.5 cm), greater than 50 inches (127 cm) or greater than 100 inches (254 cm), may be formed. In terms of ranges, the large article may have a three-axis thickness of from 4 to 190 inches (10.2 to 493 cm), eg., from 4 to 110 inches (10.2 to 279 cm) or from 4 to 70 inches (10.2 to 178 cm). Such large articles may be formed using a prepolymer mixture, e.g., PCL prepolymer mixture, having a free MDI level in the range of from 2.0 wt% to 5.0 wt%, e.g., from 2.5 to 4.0 wt% or from 2.75 to 3.5 wt%, based on the weight of the prepolymer mixture, e.g., PCL prepolymer mixture. The present invention may also be used to prepare articles having a three-axis thickness of less than 4 inches (10 cm). Depending on the shape of the mold used to form the elastomer, there may be one or more sections that have a large three-axis thickness, i.e., greater than 4 inches (10.2 cm), and one or more thin sections of less than 4 inches (10.2). One such mold suitable for prepolymer mixtures of the invention is described in co-pending U.S. Application No. 12/036,939, filled on February 25, 2008, entitled, "Non-Pneumatic Tire," the entirety of which is incorporated herein by reference.

In addition to the three-axis thickness, such prepolymer mixtures, e.g., PCL prepolymer mixtures, may be used to form large elastomer articles that weigh from 225 kg to 7,000 kg (about 500 lbs to 15,000 lbs), e.g., 900 kg to 4,600 or 2,700 kg to 3,700 kg. Preferably, the large elastomeric article is formed in a single molding step (rather than a plurality of molding steps) from a pre-elastomer mixture that is a single batch. It has now been discovered that such large elastomer articles may be formed from highly stable pre-elastomer mixtures having free MDI levels that provide a long fluid shelf life, thus allowing the mold to be filled with the appropriate amount of pre-elastomer mixture prior to curing. It should be understood, of course, that embodiments of the invention may also be employed to produce small objects that weight less than 225 kg.

In one embodiment, the large article is a non-pneumatic tire such as those described in U.S. Application No. 12/036,939, filed on February 25, 2008, incorporated above. Such non-pneumatic tire are suitable for OTR vehicles, also known as of-highway vehicles, and are commonly used in rugged terrain for mining, excavation, construction, military applications, and other heavy industrial applications. OTR vehicles include, for example, tractors, trucks, loaders, dozers, graters, excavators, etc., and may have operational weights as high as 380 to 460 tons. Such OTR vehicles may be used in open pit mining and subterranean minting operations, e.g. gold mines, platinum mines, copper mines, coal mines, etc. The tires used can those vehicles may have an outer diameter that may range from 25 inches (64 cm) to 190 inches (483 cm), e.g., from 60 inches (152 cm) to 159 inches (404 cm) or from 63 inches (160 cm) to 100 inches (254 cm) and an inner diameter that may range from 20 inches (51 cm) to 140 inches (356 cm), e.g., from 30 inches (76 cm) to 110 inches (279 cm) or from 40 inches (102 cm) to 80 inches (203 cm). The tires may support 9,000 kg to 91,000 kg per tire (about 20,000 lbs to 200,000 lbs per tire), e.g. 18,000 kg to 68,000 kg per tire or 27,200 kg to 45,400 kg per tire. Also, such tires may support such weights when the vehicle is traveling of speeds ranging from 5 to 100 km/hr (about 2 to 60 mph), e.g., 10 to 65 km/hr or 30 to 50 km/hr. Also, such tires may have an operational lifetime, e.g., the hours the tire can run with full load at full speed, for mining conditions of at least 500 hours, e.g., at least 750 hours or at least 1,000 hours. In terms of rangers, the operational lifetime is from 500 to 15,000 hours, e.g., 750 to 8,000 hours or 1,000 two 3,000 hours. Tires with such operational lifetimes are particularly beneficial for OTR mining vehicles.

As indicated above, providing a desired temperature profile for the pre-elastomer mixture is essential for forming highly durable articles, particularly large articles. Although the heat from the oven may eventually penetrate the article if the article and mold are left in the oven for a long enough period of time, such extended oven heating is generally not desired due to the !ow thermal conductivity of polyurethane, which generally does not provide a desirable temperature profile for curing the inner regions of the mold. Without being bound by theory, it is believed that the exothermic nature of the curing process employed in the embodied processes of the invention propagates a high temperature wave from the heated edge of the prepolymer mixture, e.g., PCL prepolymer mixture, of the mold toward the center region(s) within the mold. This temperature wave provides uniform and accelerated heating, thereby preventing or eliminating the formation of cracks or incomplete curing in the central region of the mold and resulting in a highly durable high performance article. That is, the heating and resuming deblocking should occur relatively quickly in the pre-elastomer mixture in order to provide desirable cure characteristics. If the prepolymer mixture is improperly, e.g., slowly, heated unblocking will be inhabited resulting in an incomplete cure. It is believed that the exothermic nature of the curing process of the invention facilitates the curing process in articles with cross-sections having a three-dimension thickness greater than 4 inches (10.2 cm), e.g., greater than 10 inches (25.4.cm), greater than 25 inches (63.5 cm), greater than 50 inches (127 cm) or greater than 100 inches (254 cm), and with prepolymer mixtures having desired free MDI levels, e.g., free MDI in an amount ranging from 2.0 to 5.0 wt%, from 2.5 to 4.0 wt% or from 2.75 to 3.5 wt%, based on the weight of the prepolymer mixture, e.g., PCL prepolymer mixture.

In addition to the desired temperature profile imparted by the pre-elastomer mixtures employed in the processes of the invention, the thicker and larger elastomer articles are attributable to the extended pot life of these pre-elastomer mixtures. Embodiments of the invention have an extended pot life, e.g., a pot life that allows the pre-elastomer mixture to remain uncured at temperatures that would otherwise initiate the curing. As used herein the term "pot life" refers to the period of time from when the pre-polymer mixture, e.g., PCL pre-polymer mixture, and the chain extender are mixed to form the pre-elastomer mixture, until such mixture reaches a Brookfield viscometer viscosity of at least 6000 centipoise (cPs) (millipascal/second). This time period is also commonly referred to as "shelf" life, "working life" or "pour life." In one embodiment, the pre-elastomer mixture has a pot life of from 1 to 35 days at a temperature of 70°C, e.g., from 5 to 35 days at a temperature of 70°C or from 10 to 35 days at a temperature of 70°C. It should be understood that the pre-elastomer mixture may have a longer pot life at temperatures less than 70°C. At temperatures of less than 35°C, the pre-elastomer mixtures of the invention may have a pot life of at least 90 days to at least one year. At temperatures from 35° to 50°C, the pre-elastomer mixture may have a pot life of at least 30 days to at least 90 days. At temperatures from 50° to 70°C the pre-elastomer mixture may have a pot life of at least 7 days to at least 60 days.

An additional advantage of the extended pot lives of the pre-elastomer mixtures of the invention is that the pre-elastomer mixtures may be injected into a large mold using a standard injection system without having the pre-elastomer mixture cure prematurely. A premature cure may result in the defects in the final elastomer, e.g., bubbles or cracks, resulting in increased scrap rates. The standard injection system may require additional time to fill large molds with a sufficient amount of pre-elastomer mixture, such as at least 8 hours, e.g., at least 10 hours or at least 20 hours. Thus, pot lives that are greater than these times should be sufficient to fill large mold and are generally sufficient for purposes of the present invention. In some aspects, the pot lives should be longer than the pour time, optionally at least 5%, at least 10% or at least 15% longer than the pour time, in order to allow time for entrained gases to be liberated from the pre-elastomer mixture prior to curing. In addition, it may take increased time to heat a large mold, which would also require increased pot life. For example, a large mold capable of holding 900 kg (about 2000 lbs) of pre-elastomer mixture may take about 12 hours to reach de-blocking temperature. Thus, a pot life that is greater than 12 hours should be sufficient for purposes of the present invention.

Elastomer Properties

In one embodiment, the polyurethane elastomers, e.g., PCL polyurethane elastomers, of the present invention preferably have superior wear resistance, tear strength and fatigue life properties, when compared to polyurethane elastomers formed from pre-elastomer mixtures having free MDI levels less than 2.0 wt% or greater than 5.0 wt%, based on the weight of the prepolymer mixtures, e.g., PCL prepolymer mixtures, present in the pre-elastomer mixtures. In particular, the polyurethane elastomer articles formed from such pre-elastomer mixtures exhibit substantially similar properties throughout the entire thickness of elastomer article. The substantially similar properties are particularly well suited for tire applications used on OTR vehicles.

In one embodiment, the physical properties of the resulting polyurethane article may be improved by a post-cure heating of from 135°C to 160°C, e.g., from 140°C to 155°C or from 140°C to 150°C. Such post-cure heating for other urethane articles, such as those formed from TDI-prepolymers and MOCA, generally produce articles having less desirable properties.

The polyurethane elastomers of the present invention, for example, may have a compression set percentage of from 10% to 32%, e.g., from 20% to 27% or from 22% to 26%. The polyurethane customers may have a tear strength of from 150 to 450 pounds per linear inch (pli) (26.3 to 78.8 N/mm), e.g., from 250 to 450 pli (43.8 to 78.8 N/mm) or from 300 to 450 pli (52.5 to 78.8 N/mm), in accordance with ASTM procedure D-1938. The polyurethane elastomers may have a tensile strength of from 3500 psi to 7500 psi (25.5 MPa to 54.6 MPa), e.g., from 4000 to 6000 psi (29.1 MPa to 43.7 MPa) or from 5000 to 5600 psi (36.4 MPa to 40.8 MPa). The polyurethane elastomers may have a splint value of greater than 115 pli (20.1 N/mm), e.g., greater than 140 pli (24.5 N/mm) or greater than 150 pli (26.3 N/mm), in accordance with ASTM procedure D-470. The polyurethane elastomers of an embodiment of the invention may have a Texus Flex value, starting with a 2 mm cut, at 30% of greater than 10,000 cycles e.g., greater than 20,000 cycles or greater than 30,000 cycles in accordance with ASTM procedure D3629-99. The polyurethane elastomers of an embodiment of the invention may have a Texus Flex value, starting with a 2 mm cut, at 45% of greater than 1,500 cycles, e.g., greater than 2,000 cycles or greater than 2,500 cycles in accordance with ASTM procedure D3629-99. Such polyurethane elastomers may have Bayshore rebound value of from 52 to 99.9, e.g., from 55 to 95 or from 58 to 90 in accordance with ASTM procedure D-2632. The polyurethane elastomers may have a Shore hardness value of from 85A to 96A, e.g., from 90A to 95A or from 91A to 95A in accordance with ASTM procedure 2240-00. The polyurethane elastomers may have a DIN abrasion of from 5 to 31 mm$^3$, e.g., from 5 to 25 mm$^3$ or from 5 to 20 mm$^3$, in accordance with ASTM procedure D-5963. The polyurethane elastomer may have a minimum tan $\delta$ at 30-160°C of from 0.005 to 0.035, e.g., from 0.005 to 0.025 or 0.005 to 0.020 and a tan $\delta$ at 30°C of from 0.02 to 0.06, e.g., from 0.02 to. 0.05 or 0.02 to 0.04; a tan $\delta$ at 150°C of from 0.005 to 0.03.5, e.g., from 0.005 to 0.025 or 0.005 to 0.020. The polyurethane elastomers may have dynamic properties characterized by having a storage modulus ratio of $G'_{-30°C}$ to $G'_{30°C}$ ranging from 1.0 to 2.5, e.g., from 1.5 to 2.4 or from 1.75 to 2.3; or dynamic properties characterized by having a storage modulus ratio of $G'_{130°C}$ to $G'_{30°C}$ that is from 1.05 to 3, e.g., from 1.06 to 2.5 or from 1.07 to 2.0. In one embodiment, the polyurethane elastomer has at least two of the above-identified properties. Optionally, the polyurethane elastomer has at least three of the above-identified properties.

In another embodiment, the invention is to a polyurethane elastomer article having a Texus Flex value at 30% of 34,000 cycles and a minimum tan $\delta$ at 30-160°C of 0.018. Optionally, such articles, in addition to the Texus Flex value at 30% and minimum tan $\delta$ at 30-160°C, also have a tear strength property of from 150 to 450 pli in accordance with ASTM procedure D-1938 and a DIN abrasion of from 5 two 31 mm$^3$ in accordance with ASTM procedure D-5963. In still further embodiments, such articles may also have one or more of the other properties listed above.

In another embodiment, the polyurethane elastomer article has a Texus Flex value at 30% of greater than 10,000 cycles in accordance with ASTM procedure D-3629-99; and a tear strength of from 150 to 450 pli in accordance with ASTM procedure D-1938.

In another embodiment, the polyurethane elastomer article has a Texus Flex value at 30% of greater than 10,000 cycles in accordance with ASTM procedure D-3629-99; and a DIN abrasion of from 5 to 31 $mm^3$ in accordance with ASTM procedure D-5963. Optionally, such embodiments may also have one or more of the other properties listed above.

In once embodiment, the invention is directed to a polyurethane elastomer article having a minimum tan $\delta$ at 30-160°C of from 0.005 to 0.035, e.g., from 0.005 to 0.025 or from 0.005 to 0.020, and a tear strength of from 50 to 450 pli in accordance with ASTM procedure D-1938. Optionally, such embodiments may also have one or more of the other properties listed above,

In one embodiment, the invention is directed to a polyurethane elastomer article having a minimum tan $\delta$ at 30-160°C of from 0.005 to 0.035, e.g., from 0.005. to 0.025 or 0.005 to 0.020, and a DIN abrasion of from 5 to 31 $mm^3$ In accordance with ASTM procedure D-5963. Optionally, such embodiments may also have one or more of the other properties listed above.

In one embodiment, the invention is generally directed to a polyurethane elastomer article having a tear strength of from 150 to 450 pli in accordance with ASTM procedure D-1938, and a DIN abrasion of from 5 to 31 $mm^3$ in accordance with ASTM procedure D-5963. Optionally, such embodiments may also have one or more of the other properties listed above.

Embodiments described above with various properties are considered to be high performance, and in particular, have properties, such as fatigue, dynamic, tear and abrasion, which are characterized by Texus Flex, minimum tan $\delta$ at 30-160°C., trouser tear, and DIN abrasion.

The test used to measure or determine the properties of such articles made from the prepolymer mixtures, e.g., PCL prepolymer mixtures, and chain extenders set forth above will now be described. An exemplary list of mechanical properties that may be considered for articles intended tor such high performance applications includes, but is not limited to, the following: Shore A Hardness, Tensile Strength, Texus Flex, Trouser Tear, Rebound, Din Abrasion, Dynamic Modulus Ratio and Tangent Delta. Most of such tests involve ASTM standards and modified ASTM standards.

1. "Trouser Tear" (ASTM D-1938)

The force necessary to propagate a tear in plastic film and thin sheeting by a single-tear method is often chatacterized by a Trouser Tear test in accordance with ASTM procedure ASTM D-1938, entitled "Standard Test Method for Tear-Propagation Resistance (Trouser Tear) of Plastic Film and Thin Sheeting by a Single-Tear Method," the entirety of which is incorporated herein by reference, This test method rates the tear propagation resistance of various samples of comparable thickness.

In the Trouser Test procedure, specimens are cut into 25 mm) by 75 mm) rectangles. A 50 mm cut is made down the center of each specimen leaving a "trouser-shaped" specimen having two equally sized legs. The test specimen may be temperature and/or humidity conditioned. As an example, the test specimen can be kept at up to 100% relative humidity, e.g., up to 75% rotative humidity, sup to 50% relative humidity or up to 25% relative humidity. As another example, the test specimen can be kept at up to 100°C, e.g., at least 75°C, at least 50°C, at least 25°C or at least 0°C. The test specimen may be kept at ambient temperature and/or humidity, e.g., 23°C. and 50% relative humidity.

A load is then applied to the legs of the test specimen. In an exemplary embodiment, an Instron™ universal testing machine (5560 series) is utilized to apply the load to the test specimen. One grip of the universal testing machine is attached to one leg and the other grip of the machine is attached to the other leg. The universal testing machine pulls each of the legs of the test specimen in opposing directions. The machine measures the force, F, utilized in putting the specimen. As the legs are putted apart from one another, a tear propagates. The test can be continued until the tear propagates through the remaining 1 inch (25 mm) of the length of the sample. The universal testing machine measures the force utilized in putting the specimen, the rate of separation of the grips and the time elapsed until the teat propagate through the specimen, e.g., until the specimen is broken into multiple pieces.

The articles of an embodiment of the invention preferably have a tear strength of from 150 to 450 pli (26.3 to 78.8 N/mm), e.g., from 250 to 450 pli (43.8 to 78.8 N/mm) or from 300 to 450 pli (52.5 to 78.8 N/mm).

2. Tensile Strength (ASTM D412)

The tensile strength, tensile modulus and percent elongation are often characterized by a tensile tear test. The corresponding ASTM test is designated ASTM D412, entitled "Standard Test Methods for Vulcanized Rubber and Thermoplastic Elastomers-tension" the entirety of which is incorporated herein by reference.

The testing involves a sample that is cut into a dumbbell shaped specimen using the Die C dimensions provided by ASTM D412 which are: A-25mm, B-40mm, C-11 5mm, D-32mm, D-E-13mm, F-19mm, G-14mm, H-25mm, L-33, W-6mm, and Z-13mm. The test specimen is tripped at opposite ends and a load is applied thereto. In an exemplary embodiment, an Instron universal testing machine is utilized to apply the load to the test specimen. The machine grips the test specimen on the opposing ends and putts the test specimen in opposing directions. The machine can measure the force, F, utilized in pulling the specimen, In an exemplary test procedure, the specimen is pulled until it ruptures. The force required to rupture the sample is the maximum tensile strength of the specimen. The amount of elongation, ΔL, undergone by the test specimen can be measured as well. The universal testing machine measures and records modulus of elasticity and/or tensile strength.

The articles of an embodiment of the invention preferably have a tensile strength of from 3500 psi to 7500 psi (23.5 MPa to 54.6 MPa), e.g., from 4000 to 6000 psi (29.1 MPa to 43.7 MPa) or from 5000 to 5600 psi (36.4 MPa to 40.8 MPa).

3. Texus Flex (ASTM D-3629)

The fatigue life of a particular material is characterized by a TEXUS Flex test. The Texus Flex test measures cut growth effect at different strains, e.g., 30% or 45%. The corresponding test is designated ASTM D-3629-99, entitled "Standard Test Method for Rubber Property-Cut Growth Resistance), the entirety of which is incorporated herein by reference. In Texus Flex testing, a notch is formed, e.g., molded or cut, into a test specimen, e.g., a 0.08 inch (0.20 cm) notch. In one exemplary test procedure, there are thick, e.g., 0.188 inches (0.48 cm) and thin, e.g., 0.127 inches (0.35 cm) specimens. The notch is formed or cut in a position at which it is known that the notch will bend. The specimen or specimens are then placed on a wheel fixture. The test specimen(s) are temperature conditioned at up to 100°C, e.g., at least 70°C, at least 50°C, at least 25°C or at least 0°C. In a particular case, the specimens are temperature conditioned at 70°C. The wheel fixture is positioned in relation to a bending roll such that the bending roll causes an interference with the samples as they are held by the wheel fixture. This interference causes a bending deflection as the wheel fixture rotates. In one exemplary testing procedure, the interference causes a 45% strain on the thick specimens. In another testing procedure, the interference causes a 30% strain on the thick specimens. The wheel mixture is rotated, e.g., at about 500 r.p.m. until a predetermined amount of cycles occurs. This rotation causes the cuts to grow. At the end of the predetermined time the growth of the cuts is measured and recorded. The rotating continues until the cut growth reaches 0.5 inches (1.27 cm). The number of cycles necessary to achieve 0.5 inches of cut growth is recorded.

The articles of an embodiment of the invention preferably have a Texus Flex value at 30% strain of greater than 10,000 cycles, e.g., greater than 20,000 cycles or greater than 30,000 cycles. The articles of an embodiment of the invention preferably have a Texus Flex value at 45% strain of greater than 1,500 cycles, e.g., greater than 2,000 cycles or greater than 2,500 cycles.

4. Rebound or Bayshore Resilience (ASTM D-2632)

The percent resilience of a particular sample is often characterized by a Rebound or Bayshore Resilience in accordance with the ASTM procedure D-2632, entitled "Standard Test Method for Rubber Property - Resilience by Vertical Rebound," the entirety of which is incorporated herein by reference. This property is a function of both the dynamic stiffness and loss factor (a measure of damping performance) of a material.

The testing involves a metal shuttle piece that is dropped onto a specimen. The highest point of rebound of the shuttle piece is measured. The value reported is the percentage of the drop height that the shuttle piece rebounds. As a specific example, if a piece is dropped from a height of 25 cm and the piece rebounds upwardly 5 cm, the rebound would be 5 cm/ 25 cm = 20%.

The articles of an embodiment of the invention preferable have rebound values of greater than 52 to 99.9, e.g., from 55 to 95 or from 58 to 90.

5. Shore A Hardness (ASTM 2240-00)

Hardness of polyurethane articles is an important characteristic for the high performance polyurethane articles of an embodiment of the present invention in accordance with ASTM procedure D2240-00, entitled, "Standard Test Method for Rubber Property Durometer Hardness," the entirety of which is incorporated herein by reference. According to preferred aspects, the hardness is express in terms of the Shore hardness, defined herein as the resistance to permanent indentation of a material as determined with a durometer, such a a HPSA durometer made by Albuquerque, Inc. or a Shore Durometer made by Instron, A durometer determines a hardness value (using the A scale) for a given sample by applying pressure to the sample with a durometer indenter foot. If the indenter foot completely penetrates the sample, a reading of 0 is obtained, and if no penetration occurs, a reading of 100 results. The reading is dimensionless. For purposes of the present invention, the durometer is calibrated such that durometer provides a hardness value of 100 when the indenter foot is displaced exactly 0.1 inch (2.54 mm).

The articles of an embodiment of the invention preferably have a Shore A hardness value greater than 85A, greater than 90A, greater than 95A or greater than 97A, In terms of ranges, these articles optionally have a Shore A hardness value ranging from 85A to 96A, e.g., from 90A to 95A or from 91A to 95A.

6. DIN Abrasion (ASTM D-5963)

The DIN abrasion method is commonly used in Europe. The abrasion, resistance of a sample that is subject to abrasive/frictional wear when in actual service is often characterized by a Din Abrasion test. The corresponding ASTM test is designated ASTM D-5963 (DIN 53516), entitled, "Test Method for Rubber Property-Abrasion Resistance Rotary Drum Abrader," the entirety of which is incorporated herein by reference. This test method measures the volume loss or weight loss of a test sample through abrasion action by rubbing over a specified grade of cloth.

The test specimens are cylindrical in shape have a diameter of at least 0.63 inches (1.6 cm) and a thickness of at least 0.25 inches (0.64 cm). The initial weight of the specimen is measured. The abrasive test may be conducted on an apparatus having a specimen holder and a rotatable cylinder to which an abrasive cloth is affixed. The specimen is pressed against the rotatable cylinder with a force of at least 10 N. The cylinder is rotated, white the abrasive cloth is in contract with the specimen, for a predetermined time period. In doing so, the abrasive cloth wears away a portion of the specimen. After cylinder has rotated for the predetermined time, the specimen is removed and weighed. The difference in weight is reworded. The abrasion resistance is calculated by measuring the weight loss after the sample is tested and comparing it to the original simple. The results are reported as a volume loss, typically in cubic millimeters ($mm^3$).

The articles of an embodiment of the invention preferably have a DIN Abrasion value of no more than 30 $mm^3$, e.g., no more than 25 $mm^3$ or no more than 20 $mm^3$. In terms of ranges, these articles optionally have a DIN Abrasion value of from 5 to 31 $mm^3$, e.g., from 5 to 25 $mm^3$ or from 5 to 20 $mm^3$.

7. **Tangent Delta (tan $\delta$)**

To obtain tan $\delta$ values, a rheometric measurement device, e.g. ARES-RDA™ made by TA Instructions, is utilized. A specimen of a particular size and shape, e.g., a rectangle, is prepared. The sample is formed, e.g., die cut, into a rectangle of the dimensions 1.5 inches (3.75 cm.) by 0.5 inches (1.25 cm.) by 0.25 inches (0.68 cm.). The specimen is subjected to a known strain by the rheometric measurement device. The storage modulus, G', and the loss modulus, G", are then calculated for the particular specimen by the device. The storage modulus, G', relates to the storage portion of the specimen. As the specimen is deflected or compressed, energy is put into the specimen. As it is released, the all of the stored energy is given back. The loss modulus, G", relates to the absorption portion of the specimen. As the specimen is strained, energy is absorbed into the specimen. The ratio of the loss modulus, G", and the storage modulus, G', is equal to the tan $\delta$.

The values for tan $\delta$ can be plotted versus temperature. The temperature at which the minimum tangent delta occurs, i.e., where the tan $\delta$ bottoms out, will be the critical temperature, $T_c$. In one example, $T_c$ is from 30-160°C.

The articles of an embodiment of the invention preferably have tan $\delta$ values as shown in **Table 1:**

| Table 1 - Tan $\delta$ values | | |
| --- | --- | --- |
| Temp | Broad Range | Preferred Range |
| -30°C | 0.02 to 0.06 | 0.02 to 0.05 |
| 0°C | -- | -- |
| 30°C | 0.005 to 0.045 | 0.01 to 0.04 |
| | 50°C 0.005 to 0.035 | 0.01 to 0.03 |
| 70°C | 0.005 to 0.035 | 0.01 to 0.03 |
| 130°C | 0.005 to 0.035 | 0.01 to 0.03 |
| 150°C | 0.005 to 0.035 | 0.005 to 0.025 |

As shown in Table 1, the minimum tan $\delta$ values from 30°C-160°C are from 0.005 to 0.035, e.g., from 0.005 to 0.025 or 0.005 to 0.020. It is widely understood, that a minimum tan $\delta$ may indicate the critical temperature for an articles.

The storage modulus, $G'$, can be obtained at various temperatures using the TA Ares RDA. An exemplary temperature range is -50°C to 200°C, e.g., 30°C to 180°C. The storage modulus values at various temperatures can be compared in ratios, such as $G'_{130°C}/G'_{30°C}$ or $G'_{-30°C}/G'_{30°C}$. The articles of an embodiment of the invention preferably have $G'_{130°C}/G'_{30°C}$ ratios ranging from 1.05 to 3, e.g., from 1.06 to 2.5 or from 1.07 to 2.0. The articles of an embodiment of the invention preferably have $G'_{-30°C}/G'_{30°C}$ ratios ranging from 1.0 to 2.5, e.g., from 1.5 to 2.4 or from 1.75 to 2.3.

The polyurethane elastomers of the invention may be employed in any of a variety of end use applications. For example, the elastomers may be employed in industrial non-pneumatic tires, wheels, mining screens, hydrocyclones, scraper blades, pipeline pigs, rollers, and wheels. In particular, the polyurethane elastomers of the invention preferably are well-suited for the formation of non-pneumatic tires, and in particular for non-pneumatic tires for OTR vehicles. OTR vehicles, also known as off-highway vehicles, are commonly used in mining, excavation, construction, military applications, and other heavy industrial applications, as discussed above. OTR vehicles include, for example, tractors, trucks, loaders, dozers, graters, excavators, and may have operational weights as high as 380 to 460 tons.

The advantages and the important features of the invention will be more apparent from the following examples.

Examples

Example 1

A prepolymer mixture containing 50% of Adiprene LFM 2450 containing 6% free MDI and 50% of Adiprene LFM 2400 containing less than 0.05% free MIDI is formed as a homogenous mixture, The prepolymer mixture has a 3% free MDI level. The temperature of the prepolymer mixture is maintained within 70°C to. 90°C. The prepolymer mixture is cured with Caytur 31 having a 95% stoichiometry at a temperature of 115°C to 127°C. The properties of this polyurethane elastomer are shown in Table 2.

Example 2

A prepolymer mixture containing 75% of Adiprene LFM 2400 containing less than 0.05% free MDI and 25% of Vibrathane 8030 containing 12% free MDI is formed as a homogenous mixture. The prepolymer mixture has a 3% free MDI level. The prepolymer mixture is cured with Caytur 31 having a 95% stoichiometry. The properties of this polyurethane elastomer are shown in Table 2.

Comparative Example A

To compare the properties of Examples 1 and 2, a comparative prepolymer mixture containing 30% of Adiprene LFM 2450 containing 6% free MDI and 70% of Adiprene LFM 2400 containing less than 0.05% free MDI is formed as a homogenous mixture. The prepolymer mixture has a 1.8% free MDI level. The prepolymer mixture is cured with Caytur 31 having a 95% stoichiometry. The properties of this comparative polyurethane elastomer are shown in Table 2.

Comparative Example B

Another comparative prepolymer mixture containing Adiprene LFM 2400 containing less than 0.05% free MDI is cured with Caytur 31 haying a 95% stoichiometry. The properties of this comparative polyurethane elastomer are shown in Table 2.

**Table 2**

| Example | 1 | 2 | A | B |
|---|---|---|---|---|
| MDI% | 3 | 3-4% | 1.8 | Less than 0.05% |
| Compression Set (%) | 24 | 26 | 26 | 32 |
| Tear (pli) Trouser | 289 | 337 | 235 | 140 |
| Split (pli) | 165 | 159 | 167 | 113 |
| Texus Flex* | | | | |
| 30% (cycles) | 11,000 | 34,000 | 7.000 | 700 |
| 45% (cycles) | 2,500 | 10,000 | 1,400 | 200 |
| Rebound Drop Ball | 57 | 59 | 57 | 58 |
| Shore Hardness A | 95 | 94 | 94 | 93 |
| $T_c$ - critical temperature | 140°C | 150°C | 150°C | 150°C |
| Tan $\Delta(T_c)$ | 0.0175 | 0.018 | 0.0178 | 0.0177 |

(continued)

**Table 2**

| Example | 1 | 2 | A | B |
|---|---|---|---|---|
| Tan Δ(30°C) | 0.0365 | 0.042 | 0.039 | 0.039 |

* Started with a 2 mm wide cut.

As shown in Table 2, Examples 1-2 show significantly improved Texus Flex, while having similar hardness, rebound, and Tan Δ values when compared to comparative Examples A and B.

Example 3

Prepolymer Adiprene™ LFM 2450 (having a free MDI content of about 3-4%) is mixed with Caytur™ 31, having a free MDA content of 0-0.5% using a machine mix. The processing conditions are provided in Table 3:

**Table 3**

| Condition | Value |
|---|---|
| Temperature | |
| Prepolymer (Adiprene 2450) | 90°C |
| Curative (Caytur 31) | 25° |
| Stoichiometry (% Theory) | 95% |
| pph Caytur (NCO = 4.5, E.W. = 230) | 23.4 |
| Mold Temperature | 115°C 125°C |
| Pot Life*, mins | >10 mins. |
| Demold Time | 10-20 mins. @ 115°C-125°C |
| Post Cure | 16 hours @ 115°C |

*Time to 100 poise, 350 g cup.

The properties of the polyurethane article made in Example 3 are compared with the properties of Vulkollan™ 27 made by Vulkoprin NV, Belgium, in Table 4. The tan δ values are compared in the FIGURE.

**Table 4**

| Property | ASTM | Example 3 | Vulkollan 27 |
|---|---|---|---|
| Tear Strength | D-1938 | 340 pli | 190 pli |
| | | (59.5 N/mm) | (33.3 N/mm) |
| Tensile strength | D-412 | 1400 psi | 1320 psi |
| | | (9.6 MPa) | (9.1 MPa) |
| Texus Flex value @ 30% | D3629-99 | 11,300 | -- |
| Texus Flex value @ 45% | D3629-99 | 3,000 | -- |
| Rebound | D-2632 | 59 | 51 |
| Shore A Hardness | 2240-00 | 93A-95A | 93A-96A |
| DIN abrasion | D-5963 | 14 mm$^3$ | 36 mm$^3$ |
| Tan δ | | | |
| 30°C | | 0.037 | 0.046 |
| Minimum at 30-160°C | | 0.018 | 0.043 |
| 150°C | | 0.018 | 0.045 |
| Dynamic Properties | | | |
| G'-30 to G'30 ratio | | 3 | 4 |
| G'30 to G'130 ratio | | 1 | 5 |

Example 4

Prepolymer Adiprene™ LFM 2450 (having a free MDI content of 3-4%) is mixed with Caytur™ 31, having a free MDA content of 0-0.5%, according the stoichiometry retationship shown in Table 5 using a machine mix. The processing conditions are similar to Example 3. Several runs are compared in Table 5.

| Table 5 | | | | | | | |
|---|---|---|---|---|---|---|---|
| Run | a | b | c | d | E | f | g |
| Stoichioimetry | 90% | 95% | 100% | 105% | 110% | 115% | 120% |
| Stress/Strain | | | | | | | |
| Mod. 10% (psi) | 550 | 555 | 543 | 542 | 544 | 539 | 518 |
| Mod. 25% (psi) | 809 | 822 | 810 | 806 | 813 | 815 | 777 |
| Mod. 50% (psi) | 1105 | 1122 | 1117 | 1111 | 1116 | 1136 | 1082 |
| Mod. 100% (psi) | 1382 | 1400 | 1397 | 1366 | 1353 | 1373 | 1295 |
| Mod. 200% (psi) | 1608 | 1638 | 1615 | 1524 | 1485 | 1442 | 1297 |
| Mod. 300% (psi) | 2006 | 2055 | 2005 | 1768 | 1662 | 1530 | 1262 |
| Mod. 400% (psi) | 2997 | 3109 | 2988 | 2260 | 1954 | 1673 | N/A |
| Mod. 500% (psi) | | | | 3307 | 2448 | 1875 | N/A |
| Tensile (psi) | 5829 | 5688 | 5614 | 4662 | 3582 | 2093 | 1307 |
| Elongation (%) | 484 | 482 | 489 | 551 | 605 | 593 | 299 |
| Tear | | | | | | | |
| Split Tear (lbf/in) | 158 | 123 | 118 | 157 | 152 | | |
| Trouser Tear (lbf/in) | 242 | 164 | 154 | 244 | 242 | | |
| Compression Set Method B | 23 | 24 | 25 | 32 | 38 | 40 | Crumbled |
| Dynamics | | | | | | | |
| Tan Delta 30°C | 0.040 | 0.040 | 0.049 | 0.051 | 0.046 | 0.052 | |
| Tan Delta Tc | 0.027 | 0.028 | 0.032 | 0.033 | 0.032 | 0.038 | |
| Critical Temp (Tc) | 130 | 130 | 130 | 120 | 110 | 110 | |
| Texus Flex (cycles to 1/2 inch failure) | | | | | | | |
| 18% Strain | | 17,300 | 265,000 | 148,000 | 18,000 | | |
| 30% Strain | | 11,300 | 96,000 | 16,000 | 2,000 | | |
| 45% Strain | | 3,000 | 20,000 | 2,000 | 2,000 | | |

Example 5

Prepolymer Adiprene™ LFM 2450 (having a free MDI content of 3-4%) is mixed with Caytur™ 31-DA, having a free MDA content of 0-0.5%, and the properties evaluated throughout the thickness of the article. Several runs are compared in Table 6.

In the control, an ASTM standard test sheet and mold were evaluated. In runs m and in used the same 5 gallon pail casting. Run in evaluated the physical properties on the top (free) surface of the article and run n evaluated the physical properties at the center of the article. The article for runs m and n weighed 33 lbs. The 5 gallon pail is 11 inches in diameter and 11 inches in height. The center section is approximately 5.5 inches from the side and top.

Run o is a 4 drum pour that formed a 2000 lb article. The Adiprene™ LFM 2450 and Caytur™ 31-DA are poured into a metal mold with metal tubular inserts. The prepolymer mixture was melted at 70°C and loaded into a mix tank, cooled to 50°C and degassed. The Caytur™ 31-DA added to the tank at room temperature, mixed and degassed. The mixture was approximately 45°C during the pouring. The mold was heated to 50°C, although the mold cooled during the long, 1¼ hour pour. The mold was moved into a 120°C oven. The mold and the pre-elastomer mixture were slowly heated until the de-blocking temperature was reached. The mixture was allowed to cure for 6-8 hours and was removed from the mold the next day. The post-cure was obtained by leaving the part in the mold overnight at 120°C. The mold was removed using two small coupons with adhesive that were inserted into the mold prior to curing. The 2000 lb article showed remarkable adhesion to these coupons when removed from the mold.

Run p is from the center section of a 5 gallon pail casting having the same dimensions as above. The article for run p weighed 33 lbs.

**Table 6**

| Run | Control | m | n | o | p |
|---|---|---|---|---|---|
| Size (lbs) | ASTM slab 0.11 lbs | 5 gallon 33 lbs | 5 gallon 33 lbs | 4 drum 2000 lbs | 5 gallon 33 lbs |
| Stress/Strain | | | | | |
| Mod. 10% (psi) | 555 | 490 | 504 | 535 | 549 |
| Mod. 25% (psi) | 822 | 795 | 775 | 820 | 835 |
| Mod. 50% (psi) | 1122 | 1109 | 1076 | 1130 | 1143 |
| Mod. 100% (psi) | 1400 | 1421 | 1383 | 1437 1407 | |
| Mod. 200% (psi) | 1638 | 1699 | 154 | 1751 | 1600 |
| Mod. 300% (psi) | 2055 | 2090 | 2043 | 2227 | 1870 |
| Mod. 400% (psi) | 3109 | 3005 | 2948 | 3497 | 2448 |
| Mod. 500% (psi) | N/A | N/A | N/A | N/A | 4600 |
| Tensile (psi) | 5688 | 5301 | 5701 | 4959 | 5193 |
| Elongation (%) | 482 | 478 | 481 | 445 | 519 |
| Tear | | | | | |
| Split Tear (lbf/in) | 158.4 | 123 | 118 | 156.9 | 152 |
| Trouser Tear (lbf/in) | 241.6 | 164 | 154 | 244 | 242 |
| Rebound | 57 | 52 | 52 | 51 | 52 |
| Compression Set | 23.6 | 23.2 | 20.9 | 24.6 | 22.5 |
| Method B | | | | | |
| DIN Abrasion | 30.1 | 30.6 | 26.5 | 28.8 29.2 | |
| Dynamics | | | | | |
| Tan Delta -50°C | 0.230 | 0.230 | 0.240 | 0.210 | 0.250 |
| Tan Delta 30°C | 0.045 | 0.042 | 0.042 | 0.047 | 0.046 |
| Tan Delta Tc | 0.026 | 0.024 | 0.022 | 0.028 | 0.029 |
| Critical Temp (Tc °C) | 120 | 140 | 150 | 130 | 140 |

As shown in Table 6, the appears to be little difference from the center to the edge of the casting in comparing runs m and n. This indicates the article was cured throughout the thickness and has a substantially uniform physical properties throughout the thickness.

In view of the many changes and modifications that can be made without departing from principles underlying the invention, reference should be made to the appended claims for an understanding of the scope of the protection to be afforded the invention.

**Claims**

1. A polyurethane elastomer article having at least two of the following properties:

   a Texus Flex value at 30% of greater than 10,000 cycles in accordance with ASTM procedure D-3629-99;
   a minimum tan $\delta$ at 30-160°C of from 0.010 to 0.025;
   a tear strength property of from 26.3 to 78.8 N/mm in accordance with ASTM procedure D-1938; and
   a DIN abrasion of from 5 to 31 mm$^3$ in accordance with ASTM procedure D-5963.

2. The polyurethane elastomer article of claim 1, wherein the polyurethane elastomer article is formed from a pre-elastomer mixture comprising a pre-polymer mixture and a chain extender and wherein preferably the pre-polymer mixture is the reaction mixture of a polyol and a diphenylmethane diisocyanate, wherein the polyol is selected from the group consisting of a polyester, a polyether, and a polycaprolactone and the chain extender is preferably selected from the group consisting of 1,4-butanediol; 13-propanediol; ethylene glycol; 1,6-hexanediol; hydroquinone-bis-hydroxyethyl ether; resorcinol di(beta-hydroxyethyl) ether; resorcinol di(betahydroxypropyl) ether; 1,4-cyclohexane dimethanol; an aliphatic triol; an aliphatic tetrol; 4,4'-methylene-bis(2-chloroaniline); 4,4'-methylene- bis(3-chloro-2,6-diethylaniline); diethyl toluene diamine; t-butyl toluene diamine; dimethylthio-toluene diamine; trimethylene glycol di-p-amino-benzoate; methylene bis orthochloroaniline, methylene bis diethylaniline; methylenedianiline; and methylenedianiline-salt complex, more preferable the chain extender comprises methylenediamime-sodium chloride complex.

3. The polyurethane elastomer article of claim 2, wherein the pre-elastomer-mixture has a pot life of from I to 35 days at a temperature of 70°C.

4. The polyurethane elastomer article of claim 2, wherein the prepolymer mixture comprises from 2.0 wt% to 5.0 wt% of free diphenylmethane diisocyanate.

5. The polyurethane elastomer article of claim 1, wherein the particle weighs from 225 kg to 7,000 kg and has a three-axis thickness of from 10.2 cm to 493 cm.

6. The polyurethane elastomer article of claim 1, wherein the article is a non-pneumatic tire which is preferably capable of supporting 9,000 kg to 91,000 kg.

7. The elastomer article of claim 1, wherein the polyurethane elastomer article has compression set percentage from 10% to 32%.

8. The elastomer article of claim 1, wherein the polyurethane elastomer article has a split value greater than 20.1 N/mm in accordance with ASTM procedure D-470,

9. The elastomer article of claim 1, wherein the polyurethane elastomer article has a Texus Flex value at 45% of greater than 1,500 cycles in accordance with ASTM procedure D-339-99.

10. The elastomer article of claim 1, wherein the polyurethane elastomer article has a rebound value of from 52 to 99.9 in accordance with ASTM procedure D-2632.

11. The elastomer article of claim 1, wherein the polyurethane elastomer article has a Shore hardness value of from 85A to 96A in accordance with ASTM procedure 2240-00.

12. The elastomer article of claim 1, having dynamic properties **characterized by** having a $G'_{30°C}$ to $G'_{30°C}$ ratio of from 1.0 to 2.5

13. A process for making a polyurethane elastomer According to claims 1-12, comprising:

   providing a prepolymer mixture comprising a polycaprolactone prepolymer, and a diphenylmethane diisocyanate, wherein the prepolymer mixture comprises the diphenylmethane diisocyanate in an amount from 2.0 wt% to 5.0 wt%;
   mixing the prepolymer mixture with a chain extender to form a pre-elastomer mixture; and
   curing the pre-etastomer mixture to form the polyurethane elastomer;
   optionally subjecting the cured pre-elastomer mixture to a post-cure heating at from 135°C to 16°C.

14. The process of claim 13, further comprising removing at least some of the free diphenylmethane diisocyanate from the prepolymer mixture forming the pre-elastomer mixture.

15. A process for making a polyurethane elastomer comprising:

   mixing a first prepolymer mixture of mass *A* and a second prepolymer mixture of mass *B*, said first prepolymer mixture comprising a first polycaprolactone having preferably molecular weight of 200 to 6000, and X wt% free diphenylmethane diisocyanate, and said second prepolymer mixture comprising a second polycaprolactone having preferably molecular weight of 200 to 6000, and Y wt% free diphenylmethane diisocyanate, and wherein *A*, *B*, X and Y are selected such that $(AX+BY)/(A+B)$ is from 2.0 to 5.0; and
   curing the mixed first and second prepolymer mixtures with a chain extender to form said polyurethane elastomer.

**Patentansprüche**

1. Ein Polyurethanelastomer-Artikel mit mindestens zwei der folgenden Eigenschaften:

   einem Texus Flex-Wert bei 30 % von mehr als 10.000 Zyklen gemäß ASTM-Verfahren D-3629-99;
   einem Mindest-tan δ bei 30-160°C von 0,010 bis 0,025;
   einer Reißfestigkeitseigenschaft von 26,3 bis 78,8 N/mm gemäß ASTM-Verfahren D-1938; und
   einem DIN-Abrieb von 5 bis 31 mm$^3$ gemäß ASTM-Verfahren D-5963.

2. Der Polyurethanelastomer-Artikel des Anspruchs 1, worin der Polyurethanelastomer-Artikel gebildet wird aus einer Präelastomermischung enthaltend eine Präpolymermischung und einen Kettenverlängerer und worin vorzugsweise die Präpolymermischung die Reaktionsmischung eines Polyols und eines Diphenylmethandiisocyanats ist, worin das Polyol ausgewählt wird aus der aus einem Polyester, einem Polyether und einem Polycaprolacton bestehenden Gruppe und der Kettenverlängerer vorzugsweise aus der aus 1,4-Butandiol, 1,3-Propandiol, Ethylenglycol, 1,6-Hexandiol, Hydrochinon-bis-hydroxyethylether, Resorcinol-di(betahydroxyethyl)ether, Resorcinol di(beta-hydroxypropyl)ether, 1,4-Cyclohexandimethanol, einem aliphatischen Triol, einem aliphatischen Tetrol, 4,4'-Methylen-bis(2-chloranilin), 4,4'-Methylen-bis(3-chlor-2,6-diethylanilin), Diethyltoluoldiamin, t-Butyl-toluoldiamin, Dimethylthiotoluoldiamin, Trimethylenglycol-di-p-aminobenzoat, Methylen-bisorthochloranilin, Methylen-bis-diethylanilin, Methylendianilin und Methylendianilinsalz-Komplex bestehenden Gruppe ausgewählt wird, bevorzugter umfasst der Kettenverlängerer einen Methylendianilin-Natriumchlorid-Komplex.

3. Der Polyurethanelastomer-Artikel des Anspruchs 2, worin die Präelastomermischung bei einer Temperatur von 70°C eine Topfzeit von 1 bis 35 Tagen aufweist.

4. Der Polyurethanelastomer-Artikel des Anspruchs 2, worin die Präpolymermischung 2,0 Gew.-% bis 5,0 Gew.-% freies Diphenylmethandiisocyanat umfasst.

5. Der Polyurethanelastomer-Artikel des Anspruchs 1, worin der Gegenstand 225 kg bis 7.000 kg wiegt und eine Dreiachsendicke von 10,2 cm bis 493 cm aufweist.

6. Der Polyurethanelastomer-Artikel des Anspruchs 1, worin der Gegenstand ein Vollreifen ist, der vorzugsweise geeignet ist, 9.000 kg bis 91.000 kg zu tragen.

7. Der Elastomerartikel des Anspruchs 1, worin der Polyurethanelastomer-Artikel einen Druckverformungsrestprozentsatz von 10% bis 32% aufweist.

8. Der Elastomerartikel des Anspruchs 1, worin der Polyurethanelastomer-Artikel einen Split-Wert größer als 20,1 N/mm gemäß ASTM-Verfahren D-470 aufweist.

9. Der Elastomerartikel des Anspruchs 1, worin der Polyurethanelastomer-Artikel einen Texus Flex-Wert bei 45% von mehr als 1.500 Zyklen gemäß ASTM-Verfahren D-3629-99 aufweist.

10. Der Elastomerartikel des Anspruchs 1, worin der Polyurethanelastomer-Artikel einen Rückprallwert von 52 bis 99,9 gemäß ASTM-Verfahren D-2632 aufweist.

11. Der Elastomerartikel des Anspruchs 1, worin der Polyurethanelastomer-Artikel einen Shore-Härtewert von 85A bis 96A gemäß ASTM-Verfahren D-2240-00 aufweist.

12. Der Elastomerartikel des Anspruchs 1 mit dynamischen Eigenschaften, die durch ein $G'_{-30°C}$ zu $G'_{30°C}$-Verhältnis von 1,0 bis 2,5 **gekennzeichnet** sind.

13. Ein Verfahren zur Herstellung eines Polyurethanelastomers gemäß Ansprüchen 1-12, enthaltend:

   Bereitstellung einer Präpolymermischung enthaltend ein Polycaprolactonpräpolymer und ein Diphenylmethandiisocyanat, worin die Präpolymermischung das Diphenylmethandiisocyanat in einer Menge von 2,0 Gew.-% bis 5,0 Gew.-% enthält;
   Mischen der Präpolymermischung mit einem Kettenverlängerer, um eine Präelastomermischung zu bilden; und

Härten der Präelastomermischung, um das Polyurethanelastomer zu bilden; wahlweise Erhitzen der gehärteten Präelastomermischung zur Nachhärtung bei 135°C bis 160°C.

14. Das Verfahren des Anspruchs 13, weiterhin enthaltend die Entfernung von mindestens einem Teil des freien Diphenylmethandiisocyanats von der die Präelastomermischung bildenden Präpolymermischung.

15. Ein Verfahren zur Herstellung eines Polyurethanelastomers enthaltend:

Mischen einer ersten Präpolymermischung der Masse *A* und einer zweiten Präpolymermischung der Masse *B*, besagte erste Präpolymermischung ein erstes Polycaprolacton mit vorzugsweise einer Molmasse von 200 bis 6000 und X Gew.-% freies Diphenylmethandiisocyanat enthaltend, und besagte zweite Präpolymermischung ein zweites Polycaprolacton mit vorzugsweise einer Molmasse von 200 bis 6000 und Y Gew.-% freies Diphenylmethandiisocyanat enthaltend, und worin *A*, *B*, X und Y so ausgewählt werden, dass (AX+BY)/(A+B) von 2,0 bis 5,0 beträgt; und
Härten der gemischten ersten und zweiten Präpolymermischungen mit einem Kettenverlängerer, um besagtes Polyurethanelastomer zu bilden.

## Revendications

1. Article en élastomère de polyuréthane ayant au moins deux des propriétés suivantes :

- une valeur de Texus Flex à 30 % de plus de 10 000 cycles conformément au mode opératoire ASTM D-3629-99 ;
- une tan δ minimale à 30-160°C de 0,010 à 0,025;
- une propriété de résistance à la déchirure de 26,3 à 78,8 N/mm conformément au mode opératoire ASTM D-1938 ; et
- une abrasion DIN de 5 à 31 mm$^3$ conformément au mode opératoire ASTM D-5963.

2. Article en élastomère de polyuréthane selon la revendication 1, dans lequel l'article en élastomère de polyuréthane est formé à partir d'un mélange de pré-élastomère comprenant un mélange de pré-polymère et un allongeur de chaîne et dans lequel de préférence le mélange de pré-polymère est le mélange réactionnel d'un polyol et d'un diphénylméthane diisocyanate, le polyol étant choisi dans le groupe constitué par un polyester, un polyéther et une polycaprolactone et l'allongeur de chaîne étant, de préférence, choisi dans le groupe consistant en le 1,4-butanediol ; le 1,3-propanediol ; l'éthylène glycol ; le 1,6-hexanediol ; l'hydroquinone-bis-hydroxyéthyl éther ; le résorcinol di (bêta-hydroxyéthyl)éther ; le résorcinol di(bêta-hydroxypropyl)éther ; le 1,4-cyclohexane diméthanol ; un triol aliphatique ; un tétrol aliphatique ; la 4,4'-méthylène-bis(2-chloroaniline) ; la 4,4'-méthylène-bis(3-chloro-2,6-diéthylaniline) ; la diéthyl toluène diamine ; la t-butyl toluène diamine ; la diméthylthiotoluène diamine ; le di-p-amino-benzoate de triméthylène glycol ; la méthylène bis orthochloroaniline ; la méthylène bis diéthylaniline ; la méthylènedianiline ; et le complexe méthylènedianiline-sel, de façon davantage préférée l'allongeur de chaîne comprenant un complexe méthylènedianiline-chlorure de sodium.

3. Article en élastomère de polyuréthane selon la revendication 2, dans lequel le mélange de pré-élastomère a une durée de vie en pot de 1 à 35 jours à une température de 70°C.

4. Article en élastomère de polyuréthane selon la revendication 2, dans lequel le mélange de pré-polymère comprend de 2,0 % en poids à 5,0 % en poids de diphénylméthane diisocyanate libre.

5. Article en élastomère de polyuréthane selon la revendication 1, dans lequel l'article pèse de 225 kg à 7 000 kg et a une épaisseur selon les trois axes de 10,2 cm à 493 cm.

6. Article en élastomère de polyuréthane selon la revendication 1, dans lequel l'article est un pneu sans air qui est, de préférence, capable de supporter 9 000 kg à 91 000 kg.

7. Article en élastomère selon la revendication 1, dans lequel l'article en élastomère de polyuréthane a un pourcentage de compression rémanente de 10 % à 32 %.

8. Article en élastomère selon la revendication 1, dans lequel l'article en élastomère de polyuréthane a une valeur de clivage supérieure à 20,1 N/mm conformément au mode opératoire ASTM D-470.

9. Article en élastomère selon la revendication 1, dans lequel l'article en élastomère de polyuréthane a une valeur de Texus Flex à 45 % de plus de 1 500 cycles conformément au mode opératoire ASTM D-3629-99.

10. Article en élastomère selon la revendication 1, dans lequel l'article en élastomère de polyuréthane a une valeur de rebond de 52 à 99,9 conformément au mode opératoire ASTM D-2632.

11. Article en élastomère selon la revendication 1, dans lequel l'article en élastomère de polyuréthane a une valeur de dureté Shore de 85 A à 96 A conformément au mode opératoire ASTM 2240-00.

12. Article en élastomère selon la revendication 1, ayant des propriétés dynamiques **caractérisées** comme ayant un rapport $G'_{30°C}$ à $G'_{30°C}$ de 1, 0 à 2, 5.

13. Procédé de fabrication d'un élastomère de polyuréthane conformément aux revendications 1-12, comprenant :

   - prendre un mélange de pré-polymère comprenant un pré-polymère de polycaprolactone et un diphénylméthane diisocyanate, le mélange de pré-polymère comprenant le diphénylméthane diisocyanate dans une quantité de 2,0 % en poids à 5,0 % en poids ;
   - mélanger le mélange de pré-polymère avec un allongeur de chaîne pour former un mélange de pré-élastomère ; et
   - faire durcir le mélange de pré-élastomère pour former l'élastomère de polyuréthane ;
   - facultativement soumettre le mélange de pré-élastomère durci à un chauffage de post-durcissement à une température de 135°C à 160°C.

14. Procédé selon la revendication 13, comprenant en outre l'élimination d'au moins une partie du diphénylméthane diisocyanate libre à partir du mélange de prépolymère formant le mélange de pré-élastomère.

15. Procédé de fabrication d'un élastomère de polyuréthane comprenant :

   - mélanger un premier mélange de prépolymère de masse $A$ et un second mélange de prépolymère de masse $B$, ledit premier mélange de prépolymère comprenant une première polycaprolactone ayant, de préférence, une masse moléculaire de 200 à 6 000, et X % en poids de diphénylméthane diisocyanate libre, et ledit second mélange de prépolymère comprenant une seconde polycaprolactone ayant, de préférence, une masse moléculaire de 200 à 6 000, et Y % en poids de diphénylméthane diisocyanate libre, et dans lequel A, B, X et Y sont choisis de telle sorte que $(AX + BY) / (A + B)$ est de 2,0 à 5,0 ; et
   - faire durcir les premier et second mélanges de prépolymère mélangés avec un allongeur de chaîne pour former ledit élastomère de polyuréthane.

EP 2 247 452 B1

# FIGURE

## *Hysteresis Comparison (Tan delta)*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030065124 A
- US 5703193 A
- GB 1101410 A
- US 4182825 A
- US 03693908 A